# EUROPEAN PATENT APPLICATION

(11) **EP 0 977 366 A1**
(43) Date of publication of application: **02.02.2000**
(21) Application number: 98202325.1
(22) Date of filing: 10.07.1998
(51) Int. Cl.: H04B 1/38

(54) **Two-way communication device for bicycle riders**

(71) Applicant: Taigulf Company Limited, Taipei (TW)
(72) Inventor: Wang, Jimmin, Pei Tou District, Taipei City (TW)
(74) Representative: Selby-Lowndes, Guy Francis Charles

(57) **Abstract**

A two-way communication device includes a transmitter/receiver circuit assembly, a head phone and microphone unit, the headphone and microphone unit including a headphone and a microphone, a signal line connected between the transmitter/receiver circuit assembly and the head phone and microphone unit for signal transmission, and a power supply unit which provides electricity to the transmitter/receiver circuit assembly and the headphone and microphone unit, the transmitter/receiver circuit assembly including a receiver unit for receiving an external radio signal through the signal line and demodulating the received radio signal into a voice signal for output through the headphone of the headphone and microphone unit, and a transmitter unit for modulating the user's voice signal received through the microphone of the headphone and microphone unit into a radio signal for output into the air through the signal line.

## Description

### BACKGROUND OF THE INVENTION

The present invention relates to a two-way communication device for bicycle riders, and more particularly to such a two-way communication device which is comprised of a headphone and microphone unit for picking up an external radio signal and the user's voice, and a transmitter/receiver circuit assembly for processing the user's voice into a radio signal for transmitting into the air, and the received radio signal into a voice signal for output to the head phone.

A walky-talky is a compact battery-operated radio transmitting and receiving set that provides two-way communication. It is practical for two-way communication within a short-distance. However, it is not safe for use in communication when riding a bicycle.

### SUMMARY OF THE INVENTION

It is the main object of the present invention to provide a two-way communication device which is particularly design for bicycle riders for two-way communication. It is another object of the present invention to provide a two-way communication device which enables the user to communicate with others without holding the device in hand when riding a bicycle. To achieve these and other objects of the present invention, there is provided a two-way communication device which is comprised of a transmitter/receiver circuit assembly, a head phone and microphone unit, the headphone and microphone unit including a headphone and a microphone, a signal line connected between the transmitter/receiver circuit assembly and the head phone and microphone unit for signal transmission, and a power supply unit which provides electricity to the transmitter/receiver circuit assembly and the headphone and microphone unit, the transmitter/receiver circuit assembly including a receiver unit for receiving an external radio signal through the signal line and demodulating the received radio signal into a voice signal for output through the headphone of the headphone and microphone unit, and a transmitter unit for modulating the user's voice signal received through the microphone of the headphone and microphone unit into a radio signal for output into the air through the signal line.

### BRIEF DESCRIPTION OF THE DRAWINGS

Figure 1 is a perspective view of a two-way communication device according to the present invention.
Figure 2 is a circuit block diagram of the present invention.

### DETAILED DESCRIPTION OF THE PREFERRED EMBODIMENT

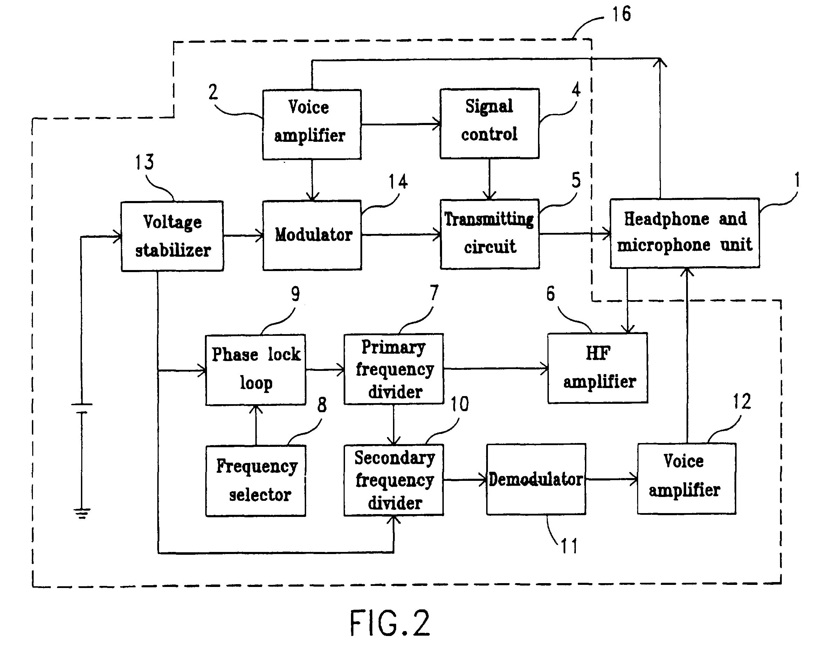

Figure 2 is a block diagram of the present invention. As illustrated, a two-way communication device in accordance with the present invention is generally comprised of a headphone and microphone unit **1**, and a transmitter/receiver circuit assembly **16**. The headphone and microphone unit **1** is the transmitting and receiving terminal of the two-way communication device. The signal line which connects the headphone and microphone unit **1** to the transmitter/receiver circuit assembly **16** is used as a transmitting and receiving antenna. The transmitter/receiver circuit assembly **16** comprises a receiver unit and a transmitter unit. In the receiver unit, received external radio signal is amplified by a high frequency amplifier **6**, then processed through a primary frequency divider **7** and a secondary frequency divider **10** into a medium frequency signal, and then demodulated into a voice signal by a demodulator **11**, and then amplified by a voice amplifier **12**, and then outputted through the headphone and microphone unit **1**. A phase lock loop **9** is controlled by a frequency selector **8** to lock the primary frequency divider **7** at a frequency range selected through said frequency selector **8**. When the user sends a voice signal through the microphone of the headphone and microphone unit **1**, the voice signal is amplified by a voice amplifier **2**, then modulated into a radio signal by a modulator **14**, and then sent to a transmitting circuit **5**, which is controlled by a signal control **4** to output the radio signal through the signal line (antenna) of the headphone and microphone unit **1**. Further, a voltage stabilizer **13** provides the necessary working voltage to the receiver unit and the transmitter unit of the transmitter/receiver circuit assembly **16**.

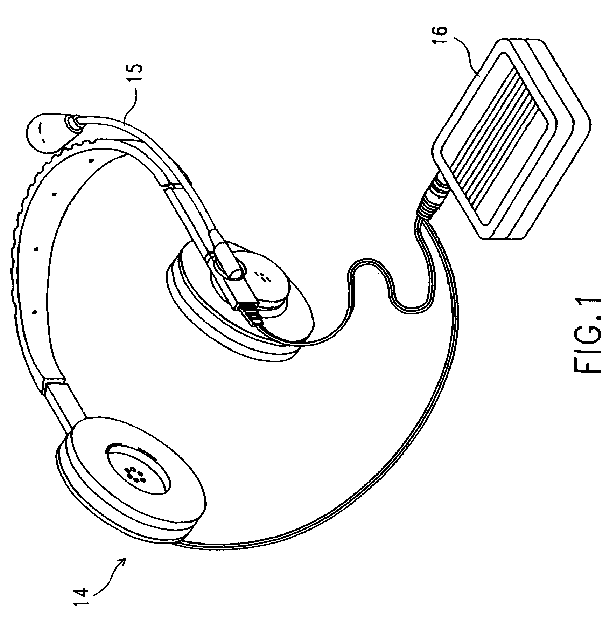

Referring to Figure 1, the microphone **15** and the headphone **14** are arranged together and connected to the transmitter/receiver circuit assembly **16** by a signal line. The signal line acts as a transmitting and receiving antenna for the transmitter/receiver circuit assembly **16**. Through the microphone **15** and the headphone **14**, the user can communicate with another person having the same apparatus when riding a bicycle.

## Claims

1. A two-way communication device comprising a transmitter/receiver circuit assembly, a head phone and microphone unit, said headphone and microphone unit comprising a headphone and a microphone, a signal line connected between said transmitter/receiver circuit assembly and said head phone and microphone unit for signal transmission, and a power supply unit providing electricity to said transmitter/receiver circuit assembly and said headphone and microphone unit, wherein said transmitter/receiver circuit assembly comprises a receiver unit for receiving an external radio signal through said signal line and demodulating the received radio signal into a voice signal for output through the headphone of said headphone and microphone unit, and a transmitter unit for modulating the user's voice signal received through the microphone of said headphone and microphone unit into a radio signal for output into the air through said signal line, said receiver unit comprising a high frequency amplifier which amplifies the received external radio signal, a primary frequency divider and a secondary frequency divider which process the amplified radio signal from said high frequency amplifier into a medium frequency signal, a demodulator which demodulates the medium frequency signal from said secondary frequency divider into a voice signal, a voice amplifier which amplifies the voice signal from said demodulator and sends the amplified voice signal to the headphone of said headphone and microphone unit, a frequency selector, and a phase lock loop controlled by said frequency selector to lock said primary frequency divider at a frequency level selected through said frequency selector, said transmitter unit comprising a voice amplifier which amplifies the user's voice signal received through said microphone of said headphone and microphone unit, a modulator which modulates the amplified voice signal from the voice amplifier of said transmitter unit into a radio signal, a signal control, a transmitting circuit controlled by said signal control to transmit the radio signal from said modulator into the air through said signal line.
